# EUROPEAN PATENT APPLICATION

(11) **EP 3 039 958 A1**
(43) Date of publication of application: **06.07.2016**
(21) Application number: 15159330.8
(22) Date of filing: 17.03.2015
(51) Int. Cl.: A01G 9/24, A01G 31/02

(54) **Plant cultivation device**

(30) Priority: 05.01.2015 TW 104100081
(71) Applicant: Cal-Comp Biotech Co., Ltd., New Taipei City 222 (TW)
(72) Inventor: Kao, Po-Chou, 222 Shenkeng Dist., New Taipei City (TW); Hsu, Sheng-Kai, 222 Shenkeng Dist., New Taipei City (TW)
(74) Representative: 2K Patentanwälte Blasberg Kewitz & Reichel

(57) **Abstract**

A plant cultivation device includes a case (100), a temperature control module (200), and a circulation fan (310). A cultivation room (110) is formed in the case (100). The temperature control module (200) includes a piezoelectric chip (210) and a heat exchange assembly (230). The piezoelectric chip (210) includes a first surface (211) outside the cultivation room (110) and a second surface (212) inside the cultivation room (110). The second surface (212) is opposite to the first surface (211). The heat exchange assembly (230) is attached to the second surface (212). The circulation fan (310) is attached to the heat exchange assembly (230) and includes an inlet side (311) for drawing in air and an outlet side (312) for blowing out air, and the inlet side (311) and the outlet side (312) are arranged in the cultivation room (110).

## Description

### BACKGROUND

### 1. Technical Field

The technical field relates to a plant cultivation device and, in particular, to a plant cultivation device which can generate air circulation.

### 2. Related Art

The conventional way to plant hydroponic vegetables in recent years usually utilizes a load tray to hold plant seeds. The load tray is disposed in a water tray to supply water to the plant seeds. The load tray includes a plurality of containers for containing the plant seeds. The container has a hole which allows the plant seed to absorb water from the water tray. The load tray and the water tray are disposed in a cultivation case under temperature and humidity control.

The conventional cultivation case usually utilizes a fan and a cooling chip to control the temperature. The disadvantage of such a structure is that cool air is blown into the cultivation case to lower the temperature in the cultivation case, but the cool air is not sufficiently distributed everywhere in the cultivation case, thereby causing a local temperature difference in the cultivation case.

In view of the foregoing, the inventor made various studies to improve the above-mentioned problems to overcome the above-mentioned drawback, on the basis of which the present disclosure is accomplished.

### BRIEF SUMMARY

The disclosure is directed to a plant cultivation case which can generate air circulation.

One of the exemplary embodiments provides a plant cultivation case which includes a case, a temperature control module, and a circulation fan. The temperature control module includes a piezoelectric chip and a heat exchange assembly. The piezoelectric chip includes a first surface outside a cultivation room and also includes a second surface opposite to the first surface and inside the cultivation room. The heat exchange assembly is disposed on the second surface. The circulation fan is attached to the heat exchange assembly, the circulation fan includes an inlet side for drawing in air and an outlet side for blowing out air, and the inlet side and the outlet side are in the cultivation room.

According to one of the exemplary embodiments, a circulation passage is formed in the cultivation room, the circulation passage includes a pair of through openings, the heat exchange assembly is disposed in the circulation passage, and the circulation fan is disposed at one of the through openings. Another circulation fan is disposed at the other through opening, and a wind direction of one of the circulation fans is reverse to a wind direction of the other one of the circulation fans.

According to one of the exemplary embodiments, the plant cultivation case includes two temperature control modules and two circulation fans disposed corresponding to the two temperature control modules. A wind direction of one of the circulation fans is reverse to a wind direction of the other one of the circulation fans. A circulation passage is formed in the cultivation room. The circulation passage includes a pair of through openings disposed corresponding to the pair of the circulation fans. The heat exchange assembly is disposed in the circulation passage, and each of the circulation fans is disposed at a respective corresponding one of the through openings.

According to one of the exemplary embodiments, the plant cultivation device further comprises a control unit. The control unit is electrically connected to the first surface and the second surface of the piezoelectric chip. The control unit is electrically connected to the circulation fan. The plant cultivation device can further comprise a temperature sensor. The temperature sensor is disposed in the cultivation room and is electrically connected to the control unit.

According to one of the exemplary embodiments, the heat exchange assembly includes a heat conduction block attached to the piezoelectric chip, a plurality of fins arranged side by side are formed on the heat conduction block, the circulation fan is disposed corresponding to the fins, and the circulation fan can generate airflow flowing to the fins on the heat conduction block. The heat dissipation assembly includes a heat pipe and a heat dissipation fan, one end of the heat pipe is attached to the piezoelectric chip, a plurality of fins are disposed on the other end of the heat pipe, the heat dissipation fan is disposed corresponding to the fins, and the heat dissipation fan can generate airflow flowing to the fins on the heat pipe.

In summary, by utilizing the circulation fan, the plant cultivation device of the present disclosure drives air in the cultivation room to circulate and to be heat-exchanged with the heat exchange assembly to reduce the local temperature difference in the cultivation room.

### BRIEF DESCRIPTION OF THE DRAWINGS

These and other features and advantages of the various embodiments disclosed herein will be better understood with respect to the following description and drawings, in which like numbers refer to like parts throughout, and in which:
Fig. 1 is a perspective view of a plant cultivation case according to a first embodiment of the present disclosure.
Fig. 2 is a use state view of the plant cultivation case according to the first embodiment of the present disclosure.
Fig. 3 is a use state view of the plant cultivation case according to a second embodiment of the present disclosure.
Fig. 4 is a use state view of the plant cultivation case according to a third embodiment of the present disclosure.
Fig. 5 is a use state view of the plant cultivation case according to a fourth embodiment of the present disclosure.
Fig. 6 is a use state view of the plant cultivation case according to a fifth embodiment of the present disclosure.
Fig. 7 is a use state view of the plant cultivation case according to a sixth embodiment of the present disclosure.

### DETAILED DESCRIPTION

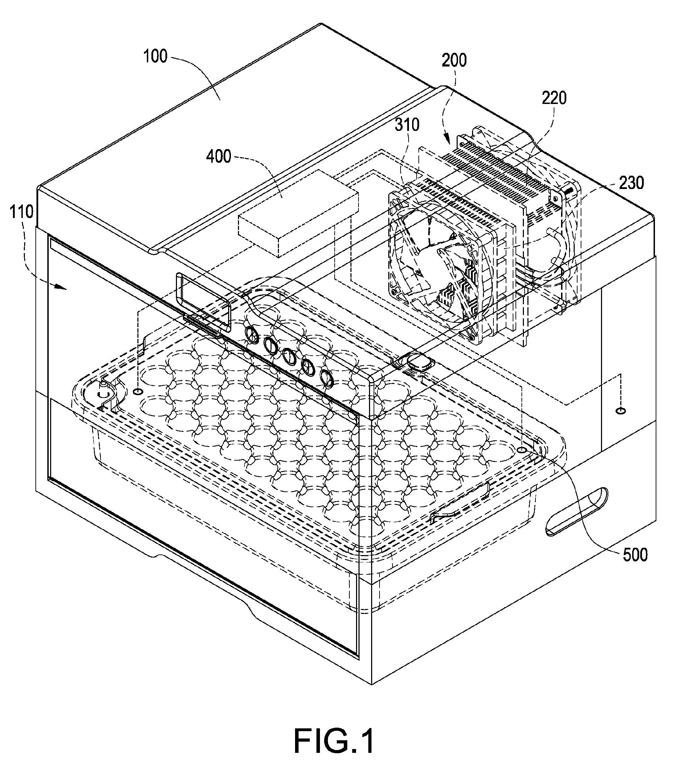

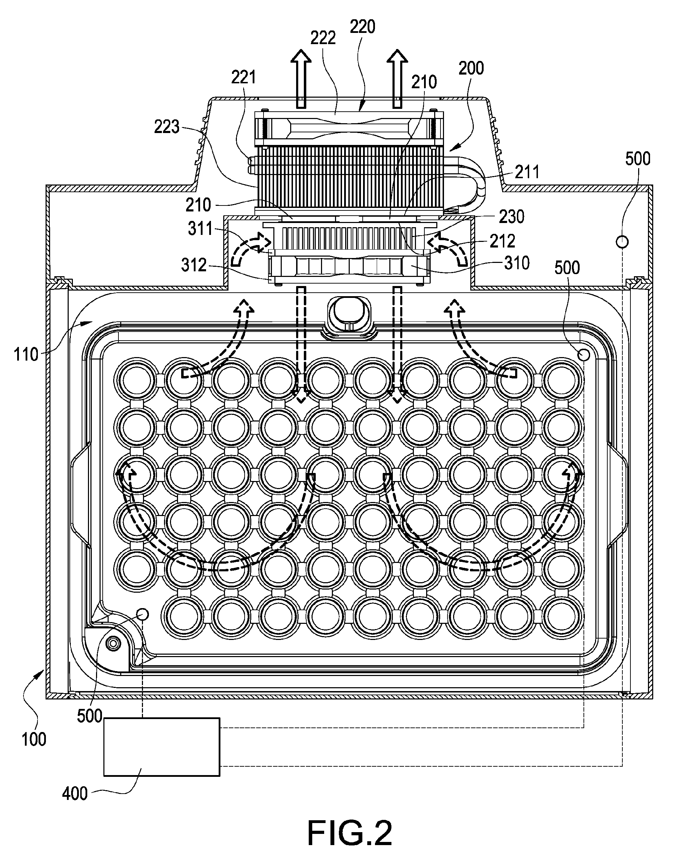

Referring to Figs. 1 and 2, a first embodiment of the present disclosure provides a plant cultivation case which comprises a case 100, a temperature control module 200, a circulation fan 310, a control unit 400, and at least one temperature sensor 500.

According to the present embodiment, a cultivation room 110 is formed in the case 100, and at least a portion of the case 100 can let in light to allow ambient light to enter the cultivation room 110. An artificial light source (e.g. a light emitting diode) can also be disposed in the cultivation room 110.

The temperature control module 200 includes at least one piezoelectric chip 210 and at least one heat exchange assembly 230. Certainly, according to requirement, the number of the piezoelectric chips 210 can be adjusted, and the number of the heat exchange assemblies 230 can be increased. According to the present embodiment, in order to enhance the operation efficiency of the temperature control module 200, the temperature control module 200 includes a pair of piezoelectric chips 210 and a heat dissipation assembly 220, wherein each piezoelectric chip 210 is in a sheet shape and includes a first surface 211 and a second surface 212 opposite thereto. The first surface 211 is outside the cultivation room 110, and the second surface 212 is inside the cultivation room 110. The heat dissipation assembly 220 is disposed outside the cultivation room 110. The heat dissipation assembly 220 includes a heat pipe 221 and a heat dissipation fan 222, one end of the heat pipe 221 is attached to the first surface 211 of each piezoelectric chip 210, and a plurality of fins 223 are disposed on the other end of the heat pipe 221. The heat dissipation fan 222 is disposed corresponding to the fins 223, and the heat dissipation fan 222 generates airflow flowing to the fins 223. The heat exchange assembly 230 is disposed in the cultivation room 110. The heat exchange assembly 230 includes a heat conduction block 231. According to the present embodiment, the heat conduction block 231 is preferably flat in shape, and one side of the heat conduction block 231 is attached to the second surface of each piezoelectric chip 210. A plurality of fins 232 arranged side by side are formed on another side of the heat conduction block 231.

The circulation fan 310 is attached to the heat exchange assembly 230. The circulation fan 310 includes an inlet side 311 for drawing in air and an outlet side 312 for blowing out air. The inlet side 311 and the outlet side 312 are both in the cultivation room. The inlet side 311 of the circulation fan 310 is disposed corresponding to the fins 232. The circulation fan 310 can drive air to circulate in the cultivation room and the air is driven to flow to the fins 232 to be heat-exchanged with the heat exchange assembly 230. By changing the wind direction of the circulation fan 310 (the outlet side 312 is disposed corresponding to the fins 232), the airflow can circulate reversely; however, the present disclosure is not limited thereto.

The control unit 400 is disposed in the case 100. The control unit 400 is electrically connected to the first surface 211 and the second surface 212 of the piezoelectric chip 210. The control unit 400 provides an electrical potential difference between the first surface 211 and the second surface 212, thereby obtaining a temperature difference between the first surface 211 and the second surface 212, so heat is transmitted from the cooler one to the hotter one of the first surface 211 and the second surface 212. By utilizing the control unit 400 to change the electrical potential difference between the first side surface 211 and the second side surface 212, the heat transmission efficiency can be adjusted. Moreover, by utilizing the control unit 400 to change the direction of the electrical potential difference, the heat transmission direction can be changed. Therefore, the air in the cultivation room 110 not only can be cooled, but also can be heated. Thus, the piezoelectric chip 210 is a heat exchange channel between the cultivation room 110 and the outside environment. The control unit 400 can be utilized to change the heat exchange efficiency and the heat transmission direction. The control unit 400 can also be electrically connected to the circulation fan 310, the heat exchange efficiency between the air in the cultivation room 110 and the heat exchange assembly 230 can be changed by controlling the rotation speed of the circulation fan 310.

According to the present embodiment, a temperature sensor 500 can be disposed in the cultivation room 110 to measure the temperature of the air in the cultivation room 110, and a plurality of the temperature sensors 500 can be disposed in a number of locations in the cultivation room 100 according to requirement. It is preferable that, the temperature sensor 500 is also disposed outside the cultivation room 110 to measure the environment temperature. Each of the temperature sensors 500 is electrically connected to the control unit 400, and the temperature data measured by the temperature sensors are transmitted to the control unit 400. According to the temperature data, the control unit 400 adjusts the electrical potential difference of the piezoelectric chip 210 and the rotation speed of the circulation fan 310.

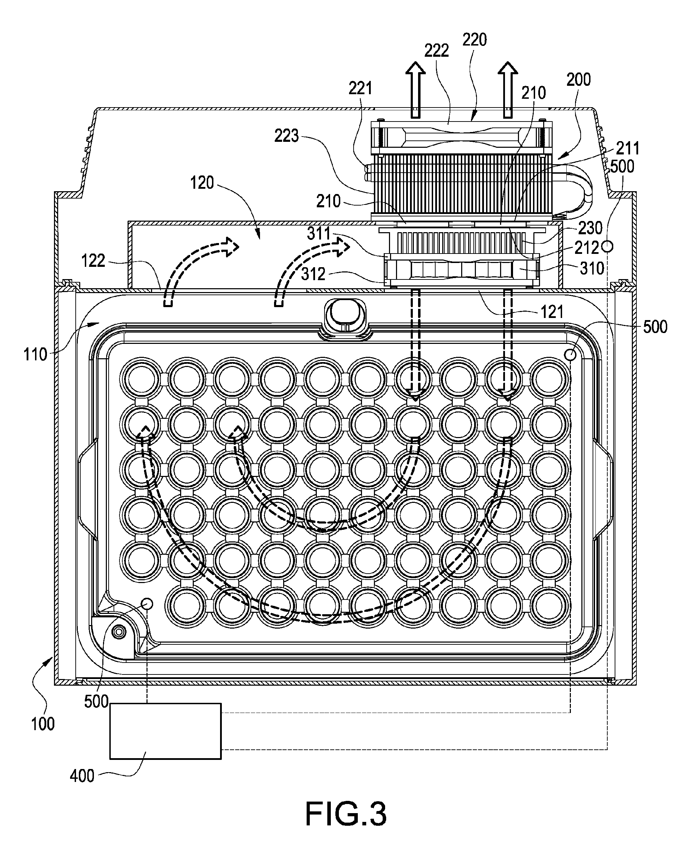

Referring to Fig. 3, a second embodiment of the present disclosure provides a plant cultivation case which comprises a case 100, a temperature control module 200, a circulation fan 310, a control unit 400, and at least one temperature sensor 500. The structure of the second embodiment is similar to the structure of the above-mentioned first embodiment. Therefore, the descriptions of the same or similar parts are omitted herein. Compared to the first embodiment, the present embodiment is different in that a circulation passage 120 is formed in the cultivation room 110 to guide air flowing and air circulation in the cultivation room 110. The circulation passage 120 includes a pair of through openings 121 and 122, the heat exchange assembly 230 is disposed in the circulation passage 120, and the circulation fan 310 is disposed at the through opening 121. The inlet side 311 of the circulation fan 310 is disposed toward inside the circulation passage 120. The outlet side 312 of the circulation fan 310 is disposed toward outside the circulation passage 120. By utilizing the circulation fan 310 to generate airflow in the cultivation room 110, the air in the cultivation room 110 passes through the through opening 122 to flow into the circulation passage 120 to be heat-exchanged with the heat exchange assembly 230, and then passes through the other through opening 121 to flow out of the circulation passage 120. The circulation passage 120 has the effect of separating airflow, thereby preventing the heat exchanged airflow from being mixed with the airflow without heat exchange to cause reduction in the heat exchange efficiency between the air in the cultivation room 110 and the heat exchange assembly 230.

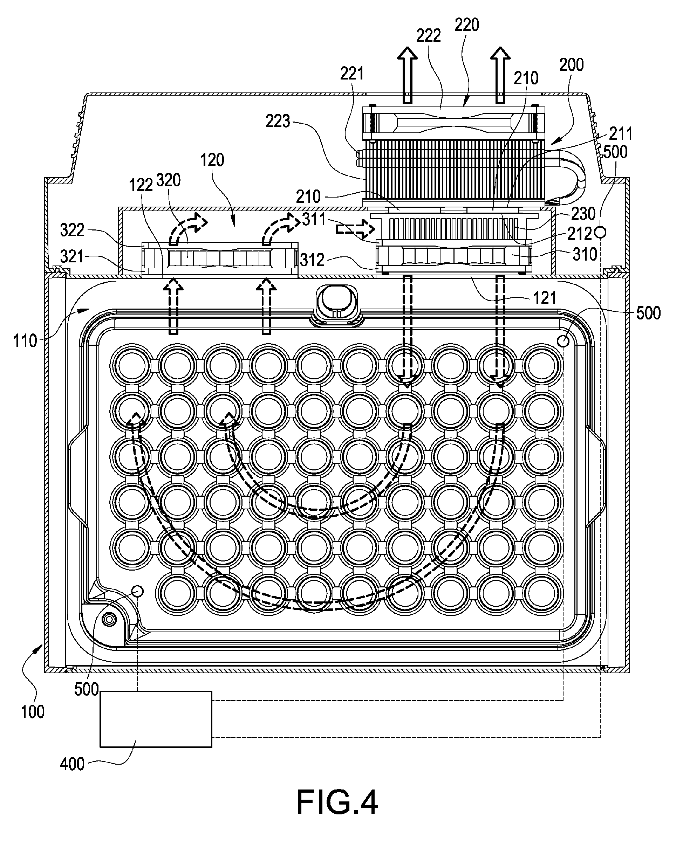

Referring to Fig. 4, a third embodiment of the present disclosure provides a plant cultivation case which comprises a case 100, a temperature control module 200, a pair of circulation fans 310 and 320, a control unit 400, and at least one temperature sensor 500. The structure of the third embodiment is similar to the structure of the above-mentioned second embodiment. Therefore, the descriptions of the same or similar parts are omitted herein. Compared to the second embodiment, the present embodiment is different in that the other circulation fan 320 is disposed at the other through opening 122. The circulation fan 320 similarly includes an inlet side 321 for drawing in air and an outlet side 322 for blowing out air, the inlet side 321 and the outlet side 322 are both disposed in the cultivation room 110. The inlet side 321 of the circulation fan 320 is disposed toward outside the circulation passage 120. The outlet side 322 of the circulation fan 320 is disposed toward inside the circulation passage 120. A wind direction of one of the circulation fans 310 and 320 is reverse to a wind direction of the other one of the circulation fans 310 and 320. The two circulation fans 310 and 320 drive the air in the cultivation room 110 to flow into the circulation passage 120 and drive the air heat-exchanged with the heat exchange assembly 230 in the circulation passage 120 to flow into the cultivation room 110, respectively.

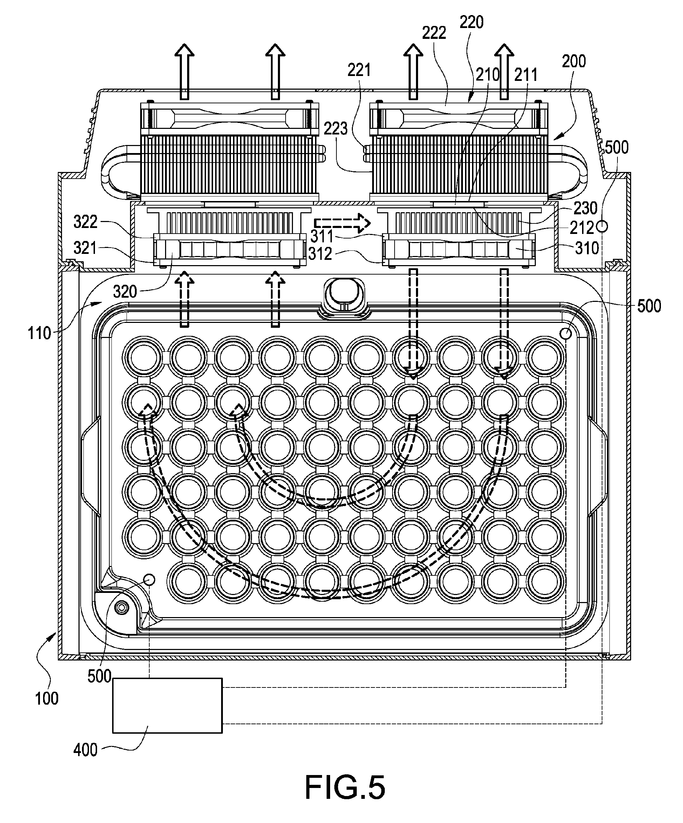

Referring to Fig. 5, a fourth embodiment of the present disclosure provides a plant cultivation case which comprises a case 100, a pair of temperature control modules 200, a pair of circulation fans 310 and 320, a control unit 400, and at least one temperature sensor 500. The structure of the fourth embodiment is similar to the structure of the above-mentioned first embodiment. Therefore, the descriptions of the same or similar parts are omitted herein. Compared with the first embodiment, the present embodiment is different in that it has two temperature control modules 200, each of the temperature control modules 200 has the same structure, so each temperature control module 200 needs only one piezoelectric chip 210 to achieve heat exchange efficiency equivalent to the heat exchange efficiency in the first embodiment. Moreover, the two circulation fans 310 and 320 are disposed corresponding to the two temperature control modules. The circulation fan 310 includes an inlet side 311 for drawing in air and an outlet side 312 for blowing out air, and the circulation fan 320 includes an inlet side 321 for drawing in air and an outlet side 322 for blowing out air. The inlet side 311 of the circulation fan 310 is disposed toward the corresponding heat exchange assembly 230. The outlet side 322 of the other circulation fan 320 is disposed toward the corresponding heat exchange assembly 230. A wind direction of one of the circulation fans 310 and 320 is reverse to a wind direction of the other one of the circulation fans 310 and 320, so as to provide a pair of pressures in directions opposite to each other to drive the air in the cultivation room 110 to flow and circulate between the pair of the pressures (i.e. the circulation fans 310 and 320). The airflow passes each heat exchange assembly 230 in sequence to be heat-exchanged therewith.

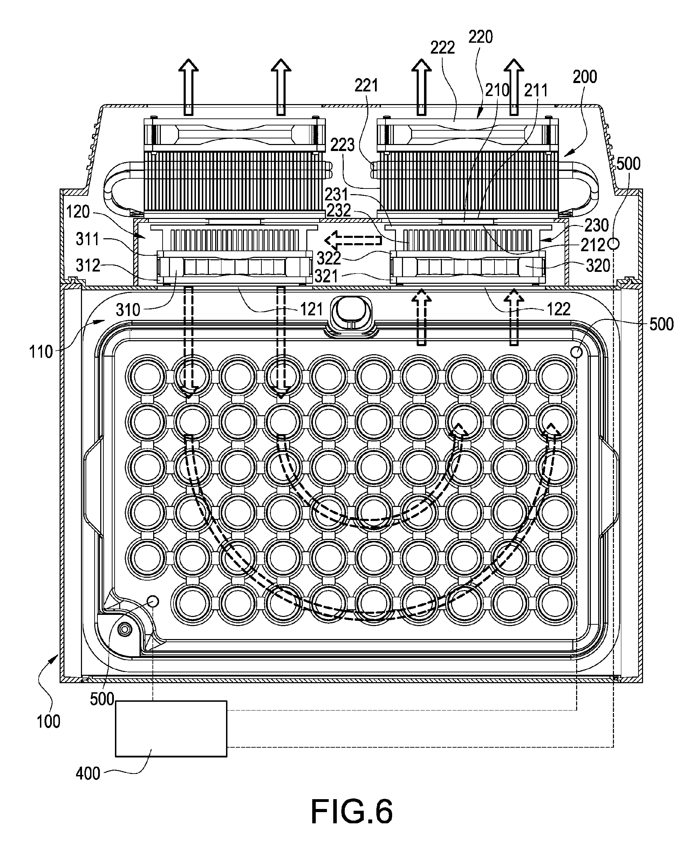

Referring to Fig. 6, a fifth embodiment of the present disclosure provides a plant cultivation case which comprises a case 100, a pair of temperature control modules 200, a pair of circulation fans 310 and 320, a control unit 400, and at least one temperature sensor 500. The structure of the fifth embodiment is similar to the structure of the above-mentioned fourth embodiment. Therefore, the descriptions of the same or similar parts are omitted herein. Compared with the fourth embodiment, the present embodiment is different in that a circulation passage 120 is formed in the cultivation room 110, the circulation passage 120 includes two through openings 121 and 122 disposed corresponding to the circulation fans 310 and 320. The pair of the heat exchange assemblies 230 is disposed in the circulation passage 120. The circulation fans 310 and 320 are disposed corresponding to the through openings 121 and 122, respectively. By utilizing the circulation fans 310 and 320 to generate airflow in the cultivation room 110, the air in the cultivation room 110 passes through the through opening 122 to flow into the circulation passage 120 to be heat-exchanged with the heat exchange assembly 230, and then passes through the other through opening 121 to flow out of the circulation passage 120. The circulation passage 120 has the effect of separating airflow, thereby preventing the heat-exchanged airflow from being mixed with the airflow without heat exchange to cause reduction in the heat exchange efficiency between the air in the cultivation room 110 and the heat exchange assembly 230. The wind direction configuration of the circulation fans 310 and 320 of the present embodiment is reverse to that in the fourth embodiment. Therefore, in the present embodiment, the air in the cultivation room 100 circulates in a direction reverse to the direction in the fourth embodiment. In practice, the direction of the air circulation can be changed according to the requirement for the circulation in the cultivation room 110.

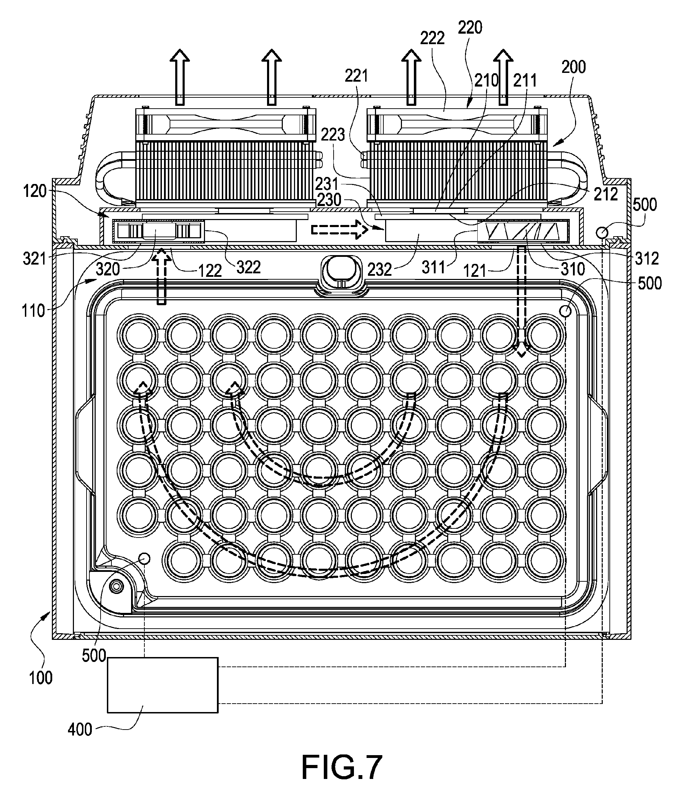

Referring to Fig. 7, a sixth embodiment of the present disclosure provides a plant cultivation case which comprises a case 100, a pair of temperature control modules 200, a pair of circulation fans 310 and 320, a control unit 400, and at least one temperature sensor 500. The structure of the sixth embodiment is similar to the structure of the above-mentioned fifth embodiment. Therefore, the descriptions of the same or similar parts are omitted herein. Compared with the fifth embodiment, the present embodiment is different in that the circulation fan 310 is an axial-flow-like fan, it laterally draws in air and axially blows out air, and it has a centrifugal-type airflow passage and axial-flow-type blades. The other circulation fan 320 is a centrifugal fan which axially draws in air and laterally blows out air. Each of the circulation fans 310 and 320 is disposed at one side of a respective corresponding one of the heat exchange assemblies 230. The inlet side 311 of the axial-flow-like circulation fan 310 is parallel to an extending direction of the fin 232 of the corresponding heat exchange assembly 230. The outlet side 322 of the centrifugal circulation fan 320 is parallel to an extending direction of the fin 232 of the corresponding heat exchange assembly 230.

The plant cultivation case of the present disclosure utilizes the circulation fans 310 and 320 to drive air to circulate in the cultivation room 110 to be heat-exchanged with the heat exchange assembly 230, so as to maintain the cultivation room 110 at a constant temperature, and the air circulation can reduce the local temperature difference in the cultivation room 110.

## Claims

1. A plant cultivation device, comprising:
a case (100), a cultivation room (110) being formed in the case (100);
a temperature control module (200) including a piezoelectric chip (210) and a heat exchange assembly (230), the piezoelectric chip (210) including a first surface (211) and a second surface (212), the first surface (211) being outside the cultivation room (110), the second surface (212) being opposite to the first surface (211) and inside the cultivation room (110), the heat exchange assembly (230) being disposed on the second surface (212); and
a circulation fan (310) attached to the heat exchange assembly (230), the circulation fan (310) including an inlet side (311) for drawing in air and an outlet side (312) for blowing out air, the inlet side (311) and the outlet side (312) being in the cultivation room (110).

2. The plant cultivation device of claim 1, wherein a circulation passage (120) is formed in the cultivation room (110), the circulation passage (120) includes a pair of through openings (121, 122), the heat exchange assembly (230) is disposed in the circulation passage (120), and the circulation fan (310) is disposed at the through opening (121).

3. The plant cultivation device of claims 1 or 2, wherein another circulation fan (320) is disposed at the other through opening (122), and a wind direction of one of the circulation fans (310, 320) is reverse to a wind direction of the other one of the circulation fans (310, 320).

4. The plant cultivation device of any of the claims 1 to 3, wherein the plant cultivation case includes two temperature control modules (200) and two circulation fans (310, 320) disposed corresponding to the temperature control modules (200), and a wind direction of one of the circulation fans (310, 320) is reverse to a wind direction of the other one of the circulation fans (310, 320).

5. The plant cultivation device of any of the claims 1 to 4, wherein a circulation passage (120) is formed in the cultivation room (110), the circulation passage (120) includes a pair of through openings (121, 122) disposed corresponding to the circulation fans (310, 320), the heat exchange assembly (230) is disposed in the circulation passage (120), and each of the circulation fans (310, 320) is disposed at a respective corresponding one of the through openings (121, 122).

6. The plant cultivation device of any of the claims 1 to 5, further comprising a control unit (400), the control unit (400) being electrically connected to the first surface (211) and the second surface 212 of the piezoelectric chip (210).

7. The plant cultivation device of claim 6, wherein the control unit 400 is electrically connected to the circulation fan 310.

8. The plant cultivation device of claims 6 or 7, further comprising a temperature sensor (500), the temperature sensor (500) being disposed in the cultivation room (110), the temperature sensor (500) being electrically connected to the control unit (400).

9. The plant cultivation device of any of the claims 1 to 8, wherein the heat exchange assembly (230) includes a heat conduction block (231) attached to the piezoelectric chip (210), a plurality of fins (232) arranged side by side are formed on the heat conduction block (231), the circulation fan (310) is disposed corresponding to the fins (232), and the circulation fan (310) generates airflow flowing to the fins (232) on the heat conduction block (231).

10. The plant cultivation device of any of the claims 1 to 9, wherein a heat dissipation assembly (220) is disposed on the first surface (211), the heat dissipation assembly (220) includes a heat pipe (221) and a heat dissipation fan (222), one end of the heat pipe (221) is attached to the piezoelectric chip (210), a plurality of fins (223) are disposed on the other end of the heat pipe (221), the heat dissipation fan (222) is disposed corresponding to the fins (223), and the heat dissipation fan (222) generates airflow flowing to the fins (223) on the heat pipe (221).
